# EUROPÄISCHE PATENTANMELDUNG

(11) **EP 2 103 362 A2**
(43) Veröffentlichungstag der Anmeldung: **23.09.2009**
(21) Anmeldenummer: 09155115.0
(22) Anmeldetag: 13.03.2009
(51) Int. Cl.: B21F 35/04, C25F 3/24, F16F 1/32

(54) **Verfahren zur Oberflächenbehandlung einer Feder**

(30) Priorität: 19.03.2008 DE 102008015061
(71) Anmelder: Christian Bauer GmbH & Co. KG, 73642 Welzheim (DE)
(72) Erfinder: Brückner, Lothar, 71229 Leonberg (DE)
(74) Vertreter: Bongen, Renaud & Partner

(57) **Zusammenfassung**

Die vorliegende Erfindung betrifft ein Verfahren zur Herstellung einer Feder, insbesondere einer Teller- und/oder einer Wellfeder, bei welchem die Feder mittels eines geeigneten Formwerkzeuges geformt wird. Erfindungswesentlich ist dabei, dass eine Oberfläche der Feder zumindest bereichsweise chemisch poliert oder elektropoliert wird.

## Beschreibung

Die vorliegende Erfindung betrifft ein Verfahren zur Herstellung einer Feder, insbesondere zur Herstellung einer Teller- und/oder einer Wellfeder, bei welchem die Feder mittels eines geeigneten Formwerkzeugs geformt wird, gemäß dem Oberbegriff des Anspruchs 1. Die Erfindung betrifft außerdem eine, nach dem erfindungsgemäßen Verfahren oberflächenbehandelte Teller- oder Wellfeder.

Teller- bzw. Wellfedern sind für industrielle Zwecke häufig eingesetzte Federtypen, welche üblicherweise eine große Belastung über einen langen Zeitraum problemlos ertragen. Um die Lebensdauer derartiger Federn steigern zu können, ist es bekannt, diese bspw. mittels geeigneten Verfahren Oberflächen zu verdichten. Ein derartiges Oberflächenverdichten kann bspw. durch ein Kugelstrahlen von bestimmten Bereichen der Feder erreicht werden, bei welchem eine durch die aufprallenden Kugelelemente beeinflusste Randschicht erzeugt wird. Gleichzeitig werden beim Kugelstrahlverfahren Druckeigenspannungen auf die Kugel-gestrahlten Bereiche aufgebracht, welche ebenfalls dazu beitragen, die dynamische Lebensdauer der so bearbeiteten Feder zu verlängern. Gleichzeitig sind chemische Verfahren zum Härten, insbesondere zum Randschichthärten, wie bspw. das Borieren bzw. das Nitrieren bekannt.

Einen großen Einfluss auf die Lebensdauer solcher Federn hat dabei insbesondere die Beschaffenheit der Federoberfläche. Weist diese bspw. Merkmale in Form von Rillen, Macken, Lunkern, Fremdpartikeln oder sonstigen Beschädigungen auf, kann dies zu einer lokalen Schwächung der Feder und damit zu einem deutlichen Herabsetzen der dynamischen Lebensdauer führen. In gleicher Weise wirkt sich eine über bestimmte Maße hinausgehende Oberflächenrauhigkeit negativ auf die Lebensdauer der Federn aus. Um dabei die Oberflächenrauhigkeit zu vermindern und insbesondere vorher genannte Oberflächenfehler ausgleichen zu können, sind bspw. mechanische Nachbearbeitungsschritte, wie bspw. ein Läppen, ein Polieren oder ein Schleifen bekannt. Bei diesen, die Oberfläche der Feder verbessernden Verfahren, wird eine mechanische Bearbeitungder Oberfläche durchgeführt, wobei die Qualität der so durchgeführten Behandlung stark abhängig von den eingesetzten Werkzeugen und der Zugänglichkeit der Oberflächen der Federn ist.

Die vorliegende Erfindung beschäftigt sich deshalb mit dem Problem, für ein gattungsgemäßes Verfahren, eine verbesserte oder zumindest eine andere Ausführungsform anzugeben, durch welches in besonders einfacher Weise die Steigerung der Lebensdauer der Federn erreicht werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine Oberfläche der Feder nach dem Formen mittels eines geeigneten Formwerkzeugs zumindest bereichsweise chemisch zu polieren oder zu elektropolieren und dadurch zu verbessern. Mit einem derartigen chemischen Polier- oder Elektropolierverfahren wird die Rauhigkeit der so behandelten Oberfläche der Feder deutlich vermindert und dadurch die Oberfläche insgesamt homogenisiert. Gleichzeitig kann hierdurch ein Abstumpfen von Kerben, Riefen oder Macken und ähnlichen Oberflächenfehlern erreicht werden. Im Vergleich zum aus dem Stand der Technik bekannten mechanischen Oberflächenvergütungsverfahren, wie bspw. dem Schleifen und Honen, erfolgt beim chemischen Polieren keine mechanische Belastung der Oberfläche und auch keine Wärmeeinwirkung auf dieselbe. Zugleich werden auch unzugängliche Stellen, wie bspw. Ecken und Kanten erfasst und äußerst wirksam behandelt. Grate an Kanten aus z.B.

Stanzprozessen werden ebenfalls entfernt, was zur dynamischen Lebensdauersteigerung beiträgt. Generell lassen sich die Vorteile des chemischen Polierens bzw. Elektropolierens wie folgt subsumieren:
- erhöhte Homogenität z.B. Mikro-Eigenspannungen und Haftfähigkeit der chemisch polierten Oberflächen,
- präzises Einhalten der Maße der herzustellenden Werkstücke, kein Verzug,
- bessere Festigkeiten bei Schweiß- und Lötverbindungen,
- Beseitigen von Risskeimen,
- vollständiges Entfernen von Flitter, Überlappungen, Schuppen und Partikeln,
- Entgraten und Glätten von Flächen und Kanten, auch im Bereich von Hohlräumen, welche üblicherweise nicht für mechanische Vergütungsverfahren zugänglich sind,
- Erzeugen einer metallisch reinen Oberfläche,
- Beseitigen von Schleif- und Bohrgraten, auch von nach innen umgelegten Graten,
- präziser Materialabtrag innerhalb enger Toleranzen,
- keine thermische oder mechanische Beanspruchung.

Generell bewirkt das chemische Polieren einen kontrollierten chemischen Abtrag an der Oberfläche mit einem Entgratungs- und Glättungseffekt. Die chemisch zu polierenden Federn werden dabei beispielsweise lose in Körben, Trommeln oder Einzelhängegestellen in das chemische Prozessbad getaucht, so dass alle Stellen der Oberfläche dem chemischen Polierprozess ausgesetzt werden. Selbstverständlich ist auch ein lediglich bereichsweises chemisches Polieren möglich. Generell sind dabei die verwendeten chemischen Polierlösungen über eine lange Einsatzdauer chemisch stabil, so dass der chemische Abtrag präzise über die Einwirkzeit gesteuert werden kann. Die chemische Abtragsrate ist dabei abhängig von der Härte und der Zusammensetzung des chemisch zu polierenden Materials. Die chemische Polierlösung ist chemisch inhibiert, so dass kein Wasserstoffeintrag (Wasserstoffversprödung) auftreten kann.

Bei einer vorteilhaften Weiterbildung der erfindungsgemäßen Lösung, wird die Feder vor oder nach dem chemischen Polieren vorgesetzt. Generell können sich Federn setzen, dass heißt es kann eine plastische Verformung auftreten, sofern die Elastizitätsgrenze des Werkstoffes überschritten wird. Nach der Entlastung wird dabei die ursprüngliche axiale Länge nicht mehr erreicht, wodurch ein Kraftverlust, die so genannte Relaxation, entsteht. Durch ein gezieltes Vorsetzen, dass heißt ein Belasten der Feder auf eine bestimmte Einfederung über einen gewissen Zeitraum, kann ein derartiger Relaxationsvorgang, dass heißt ein späteres Setzen beim Betrieb der Feder, vorweggenommen werden. Zusammen mit den bezüglich des chemischen Polierens beschriebenen Vorteile, lässt sich so eine Feder, insbesondere eine Teller- oder eine Wellfeder, herstellen, die über vorzugsweise die gesamte Lebensdauer nahezu kein Relaxationsverhalten mehr aufweist.

Bei einer weiteren vorteilhaften Ausführungsform des erfindungsgemäßen Verfahrens, wird die Feder zumindest bereichsweise gehärtet, insbesondere boriert oder nitriert. Das Borieren ist ein thermochemisches Randschichthärteverfahren, welches üblicherweise zur Erzeugung einer verschleißfesten Oberfläche angewendet wird. Es kann bei fast allen Stählen, Gusseisensorten und Sintereisen angewendet werden. Generell beruht das Borieren auf dem Einbringen von Bor in die Randzone eines Werkstoffes bei einer Temperatur zwischen 850 und 950°C. Das Bor kann dabei pulver- oder pastenförmig vorliegen, wobei sich beim Borieren bis in eine Tiefe von ca. 250 µm eine Boridschicht aus FeB und Fe₂B bildet, die stängelartig nach oben wächst und eine gute Verankerung zum Federstahl aufweist, gleichzeitig jedoch auch eine Volumenzunahme der so behandelten Randzone von ungefähr 25% mit sich bringt. Demgegenüber wird das Nitrieren in der Regel bei Temperaturen von ca. 500 bis 520°C durchgeführt, wobei der Kern des zu nitrierenden Werkstoffs ferritisch bleibt um gleichzeitig eine Bildung von oberflächennahem Austenit durch Eindiffusion von Stickstoff vermieden wird. An der Oberfläche der Feder bildet sich dabei durch Eindiffundieren von Stickstoff oder Kohlenstoff in das Werkstück eine sehr harte oberflächliche Verbindungsschicht, die je nach Behandlungszeit, dass heißt Einwirkungszeit des Stickstoffs, ca. 10-30 µm dick werden kann. Der beim Nitrieren eingelagerte Stickstoff führt zu einer Erhöhung der Dauerschwingfestigkeit und damit auch zu einer Erhöhung der Lebensdauer der so behandelten Feder.

Bei einer weiteren vorteilhaften Ausführungsform des erfindungsgemäßen Verfahrens, wird die Feder geschliffen, geläppt und/oder elektropoliert. Das Elektropolieren zählt zu den abtragenden Fertigungsverfahren, wodurch die Oberflächenrauheit verringert wird. In gleicher Weise kann hier auch von einem so genannten elektrochemischen Glätten gesprochen werden. Bei einem Elektropolieren werden generell Rauheitsspitzen schneller abgetragen also so genannte Rauheitstäler, da sich beim Elektropolieren in Mineralsäueregemischen vor der Oberfläche eine transportlimitierende Polierschicht bildet, die den Abtrag an Rauheitsspitzen begünstigt. Gleichzeitig wird durch das Elektropolieren auch die Nanorauheit reduziert. Generell kann das Elektropolieren auch zum Entgraten eingesetzt werden. Demgegenüber ist das Läppen ein maschinelles, ggf. auch von Hand ausgeübtes, zeitbestimmtes Glättverfahren von Oberflächen. Beim Läppen wird ein Gemisch aus Läpp-Pulver, also einem abrasiven Schleifmittel, und Wasser oder Läpp-Öl verwendet. Im Gegensatz zum Schleifen, wenn das Schleifkorn fest gebunden ist, wird dabei mit losem (rollendem) Korn gearbeitet. Dadurch können, selbst bei relativ grober Körnung, wegen des geringen Materialabtrags, sehr hohe Oberflächengüten erreicht werden. Wichtig ist dabei, dass die Korngröße des Schleifgutes annähernd homogen ist, da vereinzelte größere Körner, ansonsten relativ tiefe Riefen ergeben könnten. Im Gegensatz zum Schleifen, ist Läppen ein Abtrag in mehrere Richtungen. Generell kann auch noch Honen als Oberflächenvergütungsverfahren bei den erfindungsgemäß chemisch polierten Federn zur positiven Beeinflussung der tribologischen Eigenschaften genutzt werden. Honen ist dabei ein zerspanendes Feinbearbeitungsverfahren.

Bei einer weiteren vorteilhaften Ausführungsform des erfindungsgemäßen Verfahrens, wird die Feder zumindest bereichsweise kugelgestrahlt, um hierdurch eine Erhöhung der Härte einer Randschicht auf zumindest einer Unterseite, einer inneren und/oder einer äußeren Ringkante zu erreichen. Beim Kugelstrahlen werden bspw. mittels Schleuderrad-, Druckluft-, oder Injektor-Strahlanlagen kleinere Strahlmittelkörner mit hoher Geschwindigkeit gegen die zu behandelnde Oberfläche (Strahlgut) geschleudert. Bedingt durch die hohe Geschwindigkeit und den hohen Luftdruck (bis zu ca. 10 bar) in der Leitung, wird das Strahlmittel beschleunigt und zum Aufprall auf die zu bearbeitende Oberfläche gebracht. Dadurch kommt es zu einer Verfestigung und einer elastischen-plastischen Verformung im Bereich der Oberfläche, wodurch Druckeigenspannungen im Werkstück eingebracht werden können. Generell tritt beim Kugelstrahlen der Aspekt des Einbringens von Druckeigenspannungen, um die Druckfestigkeit des Werkstoffes zu steigern, in den Vordergrund.

Selbstverständlich ist dabei auch eine Permutation der in den vorherigen Absätzen genannten Verfahren zur Erhöhung der Randschichthärte bzw. zur Erhöhung der Lebensdauer möglich, wobei bei allen angewandten Verfahren zumindest ein chemisch polierender oder elektropolierender Verfahrensschritt durchgeführt wird.

## Patentansprüche

1. Verfahren zur Herstellung einer Feder, insbesondere einer Teller- und/oder einer Wellfeder, bei welchem die Feder mittels eines geeigneten Formwerkzeuges geformt wird, **dadurch gekennzeichnet, dass** eine Oberfläche der Feder zumindest bereichsweise chemisch poliert oder elektropoliert wird.

2. Verfahren nach Anspruch 1,
**dadurch gekennzeichnet,**
**dass** die Feder vor oder nach dem chemischen Polieren oder Elektropolieren vorgesetzt wird.

3. Verfahren nach Anspruch 1 oder 2,
**dadurch gekennzeichnet,**
**dass** die Feder zumindest bereichsweise gehärtet wird.

4. Verfahren nach Anspruch 3,
**dadurch gekennzeichnet,**
**dass** die Feder zumindest bereichsweise kugelgestrahlt wird, um eine Erhöhung der Härte einer Randschicht auf zumindest einer Unterseite, einer inneren und/oder einer äußeren Ringkante zu erreichen.

5. Verfahren nach Anspruch 3 oder 4,
**dadurch gekennzeichnet,**
**dass** die Feder zumindest bereichsweise boriert oder nitriert wird.

6. Verfahren nach einem der Ansprüche 1 bis 5,
**dadurch gekennzeichnet,**
**dass** die Feder geschliffen oder geläppt wird.

7. Teller- oder Wellfeder, hergestellt bzw. bearbeitet nach dem Verfahren nach einem der Ansprüche 1 bis 6.
